# EUROPEAN PATENT APPLICATION

(11) **EP 4 687 350 A1**
(43) Date of publication of application: **04.02.2026**
(21) Application number: 25192808.1
(22) Date of filing: 30.07.2025
(51) Int. Cl.: H04Q 11/00

(54) **SYSTEMS AND METHODS FOR BANDWIDTH ALLOCATION IN A PASSIVE OPTICAL NETWORK**

(30) Priority: 31.07.2024 US 202418790808
(71) Applicant: Avago Technologies International Sales Pte. Limited, Singapore 768923 (SG)
(72) Inventor: Mamidwar, Rajesh Shankarrao, Irvine, 92618 (US); Gorsetman, Yoram, Irvine, 92618 (US); Holtz, Shay, Irvine, 92618 (US); Glik, Micheal, Irvine, 92618 (US)
(74) Representative: Dilg, Haeusler, Schindelmann Patentanwaltsgesellschaft mbH

(57) **Abstract**

The disclosure describes systems (100, 300) and methods for bandwidth allocation in a passive optical network. An optical line terminal, OLT, (320) can communicate with one or more optical network terminals, ONTs (310). A dynamic bandwidth allocation, DBA, engine (345), configured within the OLT (320), can allocate constant bit rate, CBR, bandwidth for one or more transmission containers (340) from the upstream bandwidth capacity of the PON upon registration of the transmission containers (340). Each transmission container (340) can be used by an associated ONT (310) for one or more CBR applications. The OLT (320) can receive an indication of the status of a CBR application. The DBA engine (345), in response to receiving the indication, can adjust the CBR bandwidth usage for the corresponding ONTs (310) in a bandwidth map. The OLT (320) can communicate the updated bandwidth map to the ONTs (310).

## Description

### FIELD OF THE DISCLOSURE

This disclosure generally relates to passive optical networks and, more particularly, to systems and methods for allocating bandwidth to optical network terminals connected to an optical line terminal.

### BACKGROUND

The growing adoption of virtual reality and augmented reality devices is transforming digital environments, impacting communication, entertainment, privacy, and security. As these technologies become more integrated, network management becomes increasingly important. Passive optical networks (PONs) are a key technology for delivering high bandwidth to users. The PON network can include central office equipment and customer premises equipment. The central office equipment is responsible for allocating bandwidth to manage upstream traffic from user devices at the transmission convergence layer of the PON system.

### SUMMARY

The technical solutions of the present disclosure are directed to bandwidth allocation in a passive optical network. Wireless networks support a wide range of applications, from web browsing to intensive real-time communication and entertainment such as audio/video conferencing and online gaming. These applications demand not only efficient data transmission but also quick delivery of data packets to provide seamless user experiences. Applications sensitive to latency can experience significant degradation in the user experience due to delays in data transmission. Passive optical networks (PONs) can implement dynamic bandwidth allocation (DBA) algorithms to improve data transmission. However, these algorithms prioritize efficiency over latency, which can pose a challenge for real-time applications such as online gaming and video conferencing.

The DBA algorithms in PONs can rely on fixed-size time frames (usually 1 ms) to manage bandwidth distribution. This configuration may work well for applications with consistent data streams. However, upstream data originating from applications such as video conferencing or cloud gaming consoles can exhibit bursty behavior. For example, these applications generate data in bursts (e.g., video frames) at specific intervals (16, 30, or 60 milliseconds, depending on frame rate), with periods of inactivity in between. User commands from cloud gaming consoles can also occur infrequently (e.g., every few seconds). Within these time frames, transmit opportunities (e.g., allocations) can be communicated to optical network terminals (ONTs) through control messages. However, to account for variations in clock speeds/rates and signal travel distances across the network, a buffer of guard time can be inserted between each allocation. While the configuration prevents data collisions, the guard times can create unused "dead" time slots that decrease the channel's goodput (the effective data transfer rate). To minimize overhead associated with frequent allocation switching, the DBA algorithms can be configured to allocate larger time slots to each ONT. Reducing these guard times between allocations can improve bandwidth utilization for bulk data transfers, though this may increase packet latency.

In this regard, constant bit rate (CBR) allocation mechanisms can be used to provide a constant allocation rate. However, these mechanisms can mostly be used for services provided by the operator (e.g., voice/video), rather than user applications. Most latency-sensitive applications, such as gaming, augmented reality (AR), and virtual reality (VR), are treated as data and operate under variable bit rate (VBR) allocation, which can adjust based on data demands. However, for low latency applications, such as video conferencing, complete frame data is desired at the decoder. If the last byte(s) of a frame are stuck or delayed at the ONT, this can prolong the decoding process at the receiver side and can add as much latency as an entire frame. Many decoder implementations are unable to initiate decoding until the whole frame is received. Moreover, with CBR, a fixed amount of bandwidth is assigned to the ONT during registration. However, this allocation remains constant and may not adjust to the actual activity of low latency applications within the network.

The technical solutions disclosed herein overcome these challenges associated with balancing bandwidth efficiency with low latency demands. The technical solutions can implement a dynamic switching mechanism within the DBA. The DBA can assign virtual timeslots within the frame for latency-sensitive allocations identified by Alloc_ID. Alloc_ID is an identifier assigned to each ONT within a PON. The Alloc_ID can function as a reference point for the OLT to distinguish and manage different ONTs on the network. The dedicated slots can provide a bounded maximum latency between allocations for low latency applications. For other allocations prioritizing bandwidth efficiency, the DBA can combine virtual slots into larger consecutive allocations or a single longest possible consecutive allocation, maximizing goodput. The service type detection (bandwidth vs. latency) can be communicated to the DBA through various methods, including management systems, deep packet inspection at optical line terminals (OLTs) or ONTs, traffic monitoring systems, or existing infrastructure.

Moreover, the technical solutions can allow for a trade-off between bandwidth utilization and latency to minimize delays caused by waiting for entire data frames. This becomes important for real-time applications, where delays in data transmission can significantly impact the user experience. In this regard, the ONT can be configured to identify and prioritize the transmission of data packets associated with low latency applications or CBR applications before the complete frame is assembled. When a low latency application is active on client devices, the ONT can receive low latency information via a low latency agent within the ONT or a low latency controller on the network. The ONT can modify its status report messages to include a time-to-live concept for low latency allocations. This timestamp can indicate the closest deadline for the next allocation. The DBA of the OLT can use the deadline information for improved prioritization. For example, the OLT can schedule low latency allocations with tighter deadlines first to provide timely delivery of important data. This prioritization can be beneficial for real-time applications, such as AR-VR applications, where complete frames are important for proper decoder operation. Delaying the final portion of a frame due to insufficient bandwidth can lead to discarding the entire frame, causing a negative user experience. To further enhance prioritization within low latency allocations, a Layer 2 (L2) flag can be defined to identify sections of data within a packet. This flag can indicate, for example, the end of a video or audio frame. In some cases, similar to TCP PUSH/PSH flags, setting the L2 flag can instruct the OLT to prioritize the transmission of the data associated with low latency applications even if the ONT's queue associated with the corresponding TCONT data buffer only holds a single byte for that specific allocation.

Furthermore, CBR allocation can address low latency requirements by assigning a fixed bandwidth to the ONT, but the configuration can lead to inefficiency when real-time traffic is absent. To address this issue, a low latency controller can monitor applications on connected devices across the network. Upon detecting a low latency application activation, the controller can communicate with the OLT/DBA to provide CBR service for the specific ONT. When a low latency application deactivates, the controller can instruct the OLT to disable CBR via DBA. The ONT can be equipped with mechanisms to identify active low latency applications on connected devices. Based on pre-defined criteria or traffic patterns, the ONT can dynamically request CBR service activation/deactivation from the OLT. The OLT can be enhanced to process traffic patterns at the network level. By identifying characteristics associated with real-time applications, the OLT can autonomously activate CBR service for the specific ONT. This adaptive approach can allow the system to provide consistent bandwidth during active periods of low latency applications and maintain improved performance without wasting resources when such applications are inactive. As such, the technical solution can maintain low latency and improve network efficiency by dynamically adjusting bandwidth allocation based on real-time application demands.

At least one aspect of the technical solutions is directed to a system of bandwidth allocation in a passive optical network. The system can include an optical line terminal (OLT) of a passive optical network (PON). The OLT can be in communication with one or more optical network terminals (ONTs). The system can include a dynamic bandwidth allocation (DBA) engine configured to allocate for one or more transmission containers a constant bit rate (CBR) bandwidth from upstream bandwidth capacity of the PON responsive to registration of the one of the one or more transmission containers. Each of the one or more transmission containers can be used by an associated ONT for one or more CBR applications. The OLT can be configured to receive an indication of a status of a CBR application of the one or more CBR applications. The DBA engine, responsive to the indication, can be configured to modify CBR bandwidth usage of the one or more ONTs in a bandwidth map (BW Map). The OLT can communicate the bandwidth map to the one or more ONTs.

In some embodiments, the status can include one of open or closed. In some embodiments, the DBA engine can be further configured to modify the bandwidth map to increase CBR bandwidth allocation of the one or more ONTs responsive to the status of the CBR application being open. In some embodiments, the DBA engine can be further configured to modify the bandwidth map to decrease CBR bandwidth allocation of the one or more ONTs responsive to the status of the CBR application being closed. In some embodiments, the OLT can be further configured to receive indication of the status of the CBR application from at least one of the one or more ONTs. In some embodiments, the at least one of the one or more ONTs can be further configured to receive the indication of the status of the CBR application from a low latency agent or a latency controller. In some embodiments, the OLT can be further configured with a low latency agent. The low latency agent can be configured to receive indication of the status of the CBR application from the one or more CBR applications. In some embodiments, the OLT can be further configured to receive indication of the status of the CBR application from a low latency controller on another device.

Another aspect of the technical solutions is directed to a method of bandwidth allocation in a passive optical network. The method can include: identifying, by a dynamic bandwidth allocation (DBA) engine, one or more transmission containers used by an optical line terminal (OLT) of a passive optical network (PON), the OLT in communication with one or more optical network terminals (ONTs); allocating, by the DBA engine responsive to registration of the one the one or more transmission containers, for the one or more transmission containers a constant bit rate (CBR) bandwidth from upstream bandwidth capacity of the PON, each of the one or more transmission containers to be used by an associated ONT for one or more CBR applications; receiving, by the OLT an indication of a status of a CBR application of the one or more CBR applications; modifying, by the DBA engine responsive to the indication, CBR bandwidth usage of the one or more ONTs in a bandwidth map (BW Map); and communicating, by the OLT, the bandwidth map to the one or more ONTs.

In some embodiments, the status can include one of open or closed. In some embodiments, the method can include modifying, by the DBA engine, the bandwidth map to increase CBR bandwidth allocation of the one or more ONTs responsive to the status of the CBR application being open. In some embodiments, the method can include modifying, by the DBA engine, the bandwidth map to decrease CBR bandwidth allocation of the one or more ONTs responsive to the status of the CBR application being closed. In some embodiments, the method can include receiving, by the OLT, the indication of the status of the CBR application from at least one of the one or more ONTs. In some embodiments, the method can include receiving, by the OLT, the indication of the status of the CBR application from a low latency agent or a latency controller. In some embodiments, the method can include receiving, by the OLT, the indication of the status of the CBR application from the one or more CBR applications. In some embodiments, the method can include receiving, by the OLT, the indication of the status of the CBR application from a low latency controller on another device.

Yet another aspect of the technical solutions is directed to a device of bandwidth allocation in a passive optical network. The device can include one or more processors, coupled to memory, and configured with a dynamic bandwidth allocation (DBA) engine to identify one or more transmission containers used by an optical line terminal (OLT) of a passive optical network (PON). The OLT can be in communication with one or more optical network terminals (ONTs). The DBA engine can be configured to allocate for one or more transmission containers a constant bit rate (CBR) bandwidth from upstream bandwidth capacity of the PON responsive. Each of the one or more transmission containers can be used by an associated ONT for one or more CBR applications. The device can be configured to receive an indication of a status of a CBR application of the one or more CBR applications as being open or closed. The DBA engine, responsive to the indication, can be configured to modify CBR bandwidth usage of the one or more ONTs in a bandwidth map (BW Map). The device can communicate the bandwidth map to the one or more ONTs.

In some embodiments, the device can be further configured to receive the indication from one of the one or more ONTs. In some embodiments, the device can be further configured to receive the indication from a second device. In some embodiments, the device can be further configured to receive the indication from the CBR application.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A illustrates a general schematic block diagram of a communication system, in accordance with one or more embodiments;
FIG. 1B illustrates a general schematic block diagram of a portion of the communication system illustrated in FIG. 1A, in accordance with one or more embodiments;
FIG. 1C illustrates a general schematic block diagram of applications in communication with cloud infrastructure for the communication system illustrated in FIG. 1A, in accordance with one or more embodiments;
FIG. 1D illustrates a general schematic block diagram of an application for a communication system illustrated in FIG. 1A, in accordance with one or more embodiments;
FIG. 1E illustrates a general schematic block diagram of an application for a communication system illustrated in FIG. 1A, in accordance with one or more embodiments;
FIG. 1F illustrates a schematic block diagram of the communication system illustrated in FIG. 1A, including a server configured for augmented reality/virtual reality, and/or metaverse applications, in accordance with one or more embodiments;
FIG. 2A illustrates a block diagram of embodiments of a computing device, in accordance with one or more embodiments;
FIG. 2B illustrates a block diagram depicting a computing environment comprising a client device in communication with cloud service providers, in accordance with one or more embodiments;
FIG. 3A illustrates a block diagram of an example system for dynamic switching between latency sensitive and bandwidth efficient modes in a passive optical network, in accordance with one or more embodiments;
FIG. 3B illustrates a block diagram of an example system for pushing partial data upstream in a passive optical network, in accordance with one or more embodiments;
FIGS. 3C-3E illustrate block diagrams of example systems for dynamic constant bit rate bandwidth allocation in a passive optical network, in accordance with one or more embodiments;
FIG. 4A illustrates an example data transmission frame, in accordance with one or more embodiments;
FIG. 4B illustrates another example data transmission frame, in accordance with one or more embodiments;
FIG. 5 illustrates an example flow diagram of a method for dynamic switching between latency sensitive and bandwidth efficient modes in a passive optical network, in accordance with one or more embodiments;
FIG. 6 illustrates an example flow diagram of a method for pushing partial data upstream in a passive optical network, in accordance with one or more embodiments; and
FIG. 7 illustrates an example flow diagram of a method for dynamic constant bit rate bandwidth allocation in a passive optical network, in accordance with one or more embodiments.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of a time reference across all nodes and end-user devices by employing timestamps for low latency data packets at each node. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third party Wi-Fi access point, a third party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end to end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be, for instance, a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (such as video conferencing, cloud gaming, augmented reality/virtual reality (AR/VR) applications, and metaverse applications).

Some embodiments relate to a system including a first device and an application. The application operates on the first device and is configured to append time stamps to a first packet received by the first device. The time stamps indicate a first time the first packet is received by the first device and a second time the first packet is sent by the first device. Append refers to adding or attaching information to a data structure (e.g., a packet) in some embodiments.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet or data unit (e.g., network layer packets, cells, frames, etc., used in the transmission of data) to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicate across a device or a link. Monitoring or monitor refers to an action where performance is observed, checked, and/or recorded and can generally occur over a period of time.

A non-transitory computer readable medium has instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in paths associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level, or a requirement of the application or use in some embodiments. A packet refers to a unit of data that is transmitted over a network in some embodiments, and includes cells, frames, and network layer packets, for instance. The packet can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods of bandwidth allocation in a passive optical network.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can re-configure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with Wi-Fi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

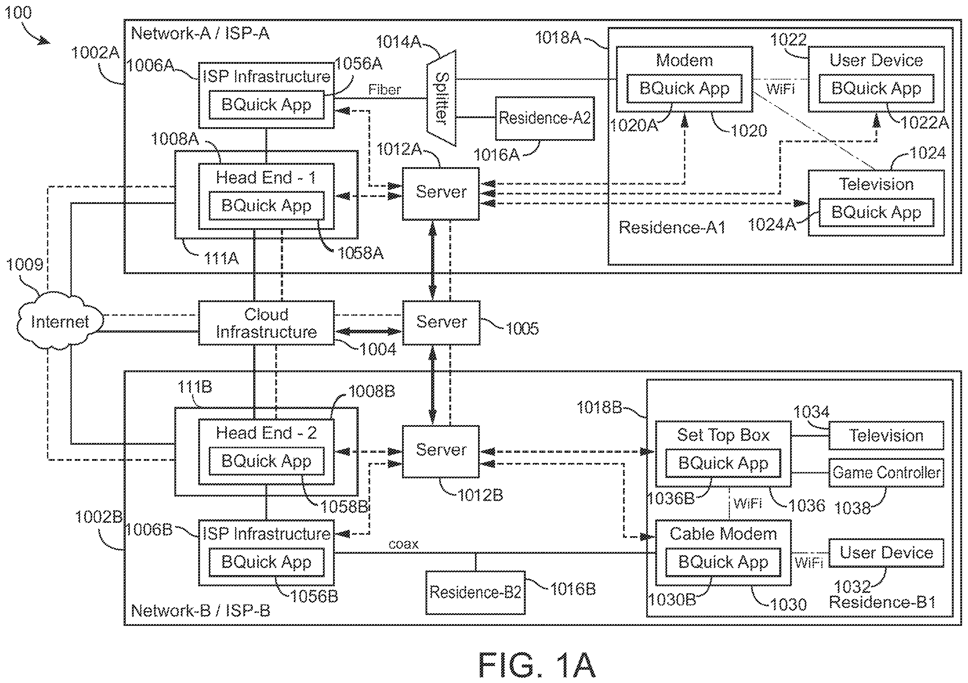

With reference to FIG. 1A, a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associated with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway, etc. and have Wi-Fi capabilities for a Wi-Fi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smartphone, AR/VR device, tablet, laptop computer, smartwatch, exercise equipment, smart appliance, camera, headphone, automobile, other computing device, etc. Residence 1016A can have similar devices to residence 1018A. Television 1024 and user device 1022 communicate with optical network unit 1020 via a wireless network or wired connections. In some embodiments, optical network unit 1020 can include an Ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 1014A is a conducting cable-type splitter (e.g., for a coaxial, not optical cable). Splitter 1014A includes repeaters, amplifiers, signal conditioners, etc. in some embodiments.

BQUICK ISP_A server 1012A is a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), a DNS (Domain Name System) server, a dynamic host configuration protocol (DHCP) server for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and can be configured to operate with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over Wi-Fi or Ethernet, for instance, for internet connectivity. Each node (e.g., routers, repeaters, modems, Wi-Fi access points) inside the home can introduce latency. ONU 1020 and modem 1030 can be any device at a home or business that connects networking devices to ISPs via an internet data pipe over coaxial cable, fiber optic cable, digital subscriber line (DSL), or cell connection (e.g., via a tower (e.g., 5G, LTE modem)) in some embodiments.

Set top box 1036 is configured to receive and decode digital television, movie, streaming, or other video signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end to end combination of networking elements used for networking traffic from a home or business to internet 1009 (e.g., public internet) in some embodiments. In some embodiments, cloud infrastructure 1004 is a set multiple servers, switches, storage units. ISPs can have a pool of data centers/cloud servers co-located with head ends 1008A and 1008B or dedicated links to cloud infrastructure 1004 from head ends 1008A and 1008B and head end connections to the internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (e.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B are operated by ISP-A and ISP-B. ISPs extend their services to various residences or businesses within communities, cities, or specific regions. Networks 1002A and 1002B represent two distinct networks served by the same or different ISPs, which may be situated in the same neighborhood or entirely in different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK_TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (MPPS), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 1056B for ISP infrastructure 106B, a head end BQUICK application 1058B associated with head end 1008B, a modem BQUICK application 1030B for modem 1030, and a set top box BQUICK application 1036B for set top box. Applications 1056B, 1058B, 1030B, and 1036B are similar to applications 1056A, 1058A, 1020A, 1022A, and 1024A. In some embodiments, when applications 1030B, 1036B, 1056A, 1056B, 1058B, 1058A, 1020A, 1022A, and 1024A are installed or associated devices join the network, the applications 1030B, 1036B, 1056A, 1056B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 1056B, 1058B, 1058A, 1020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 1056B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

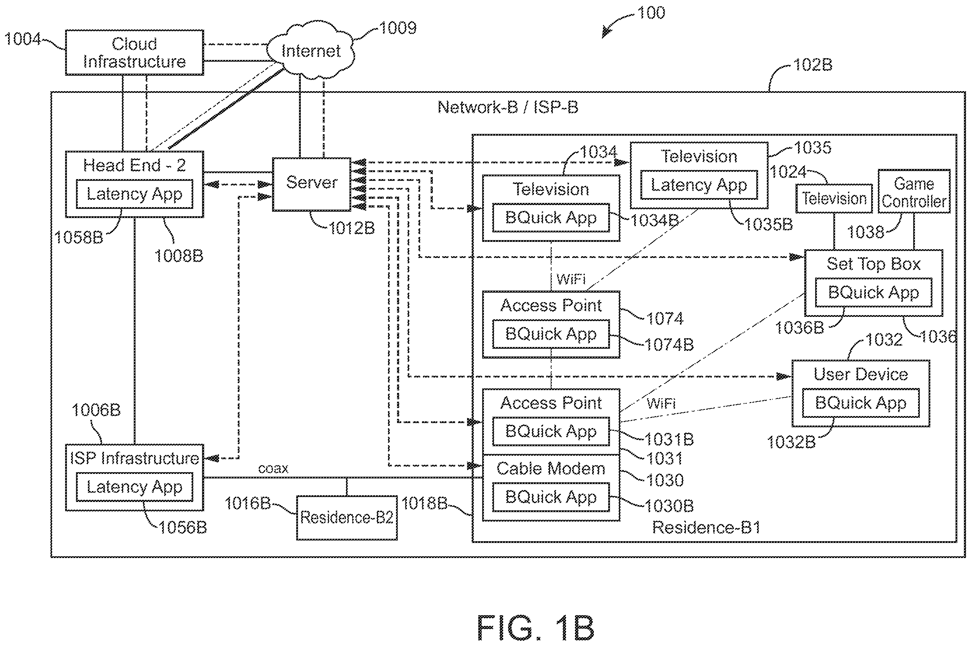

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ISP_A server 1012A, and BQUICK_ ISP_B server 1012B are in virtual communication with applications 1030B, 1031B, 1036B, 1074B 1032B, 1034B, 1035B, 1056B, and 1058B in some embodiments. A server refers to any computing device that provides services or resources to other computers or clients within a network in some embodiments.

Applications 1030B, 1031B, 1036B, 1074B, 1032B, 1034B, 1035B, 1056B, and 1058B are similar to applications 1056A, 1058A, 1020A, 1022A, and 1024A. Applications 1030B, 1031B, 1036B, 1074B, 1032B, 1034B, 1035B, 1056B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (MPPS), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK TOP server 1012, and applications 1030B, 1031B, 1036B, 1074B, 1032B, 1034B, 1035B, 1056B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 1056B, and 1058B can include algorithms for changing packet priority with time and latency requirements. Applications 1030B, 1031B, 1036B, 1074B, 1032B, 1034B, 1035B, 1056B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 1056B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables integration and collaboration between different apps, allowing them to share information, trigger actions, or synchronize state without requiring user intervention in some embodiments. BQUICK _TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 137A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 137A and 1031B (e.g., node level applications), and applications 1020A, 1024A, 1032B, 1034B, 1035B, and 1032B (e.g., client level applications) as well as their associated devices. Cloud level applications can include applications 1056B and 1058B in some embodiments. In some embodiments, the partitioning of applications 1056B, 1058B, 1020A, 1024A, 1030B, 1032B, 1034B, 1035B, 1036B, 137A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 1056B, 1058B, 1020A, 1024A, 1030B, 1032B, 1034B, 1035B, 1036B, 137A, and 1032B can achieve synchronization of the time reference across all nodes and end user devices. Applications 1056B, 1058B, 1020A, 1024A, 1030B, 1032B, 1034B, 1035B, 1036B, 137A, and 1032B utilize timestamps for low-latency data packets at each node. This enhancement enables the determination of latency at each node and reporting to server 1012 in some embodiments. By utilizing a precision time protocol (PTP), applications 1056B, 1058B, 1020A, 1024A, 1030B, 1032B, 1034B, 1035B, 1036B, 137A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

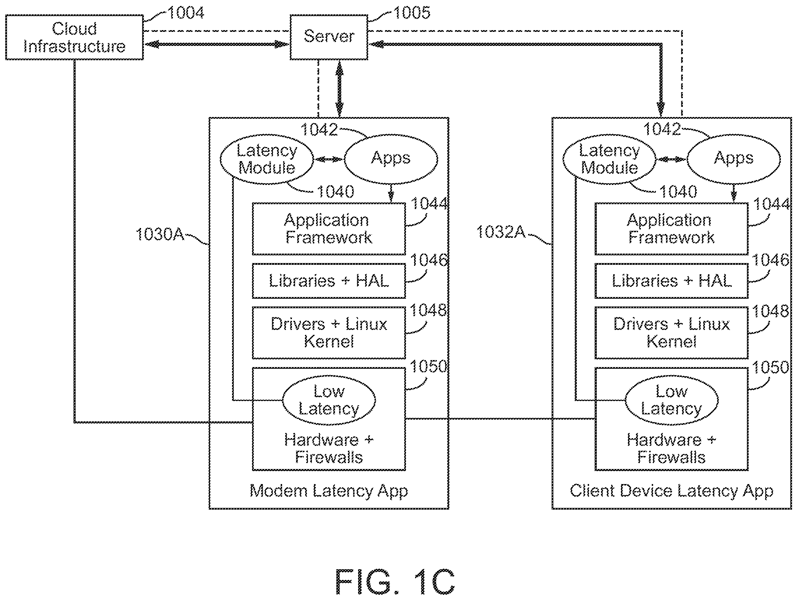

With reference to FIG. 1C, applications 1030B and 1032B each include a latency module 1040, applications 1042, an application framework 1044, libraries and hardware abstraction layer 1046, drivers and Linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third party apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and Linux kernel 1048 serves as the bridge between the hardware and the software layers of the system, managing system resources in some embodiments. Drivers and Linux kernel 1048 provide essential services and facilitate communication between software processes and hardware devices in some embodiments. Drivers and Linux kernel 1048 includes software components that facilitate communication between the operating system (OS) and hardware devices in some embodiments.

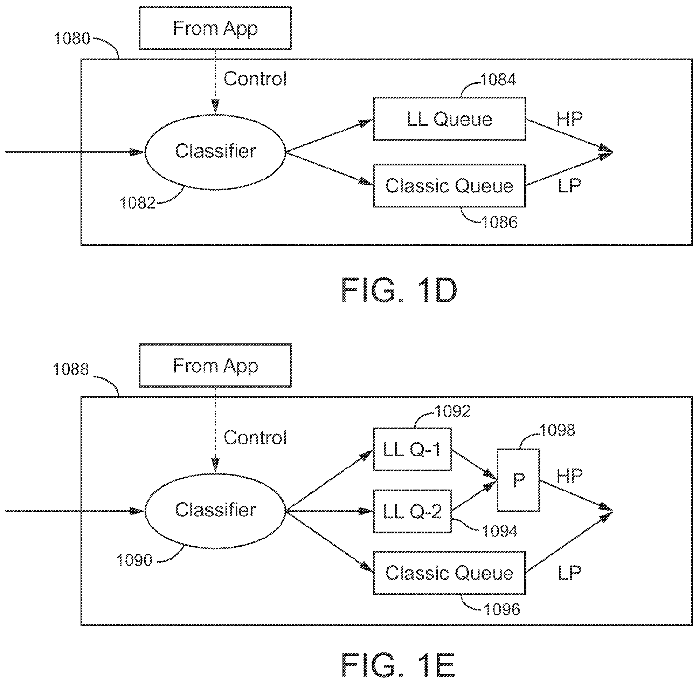

With reference to FIG. 1D, a function, service, process, or operation 1080 can be controlled by any of applications 1030B, 1031B, 1036B, 1074B, 1032B, 1034B, 1035B, 1056B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or logical constructs (e.g., implemented using data structures) used to manage the flow of packets or messages within a network device or system 100 (FIG. 1A). Queue 1084 is associated with a high performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 1056B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 1056B, 1058B, 1056A, 1058A, 1020A, 1022A, and 1024A. Operation 1088 is similar to operation 1080 and utilizes a classifier 1090, a first low latency queue 1092, a second low latency queue 1094, a classic queue 1096, and a priority queue 1098. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provides messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BQUICK TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 1056B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust responses to the latency level at a particular time, for a particular time period, etc. Latency information can be communicated to servers 1012A, 1012B, and 1012 and applications 1030B, 1031B, 1036B, 1074B, 1032B, 1034B, 1035B, 1056B, 1058B, 1056A, 1058A, 1020A, 1022A, and 1024A as timestamps appended to packets as described herein, or to a packet identifier (e.g., 5 tuples and sequence number) in some embodiments. The time stamp information can be sent to servers 1012A, 1012B, and/or 1012 via an independent virtual/logical channel in some embodiments.

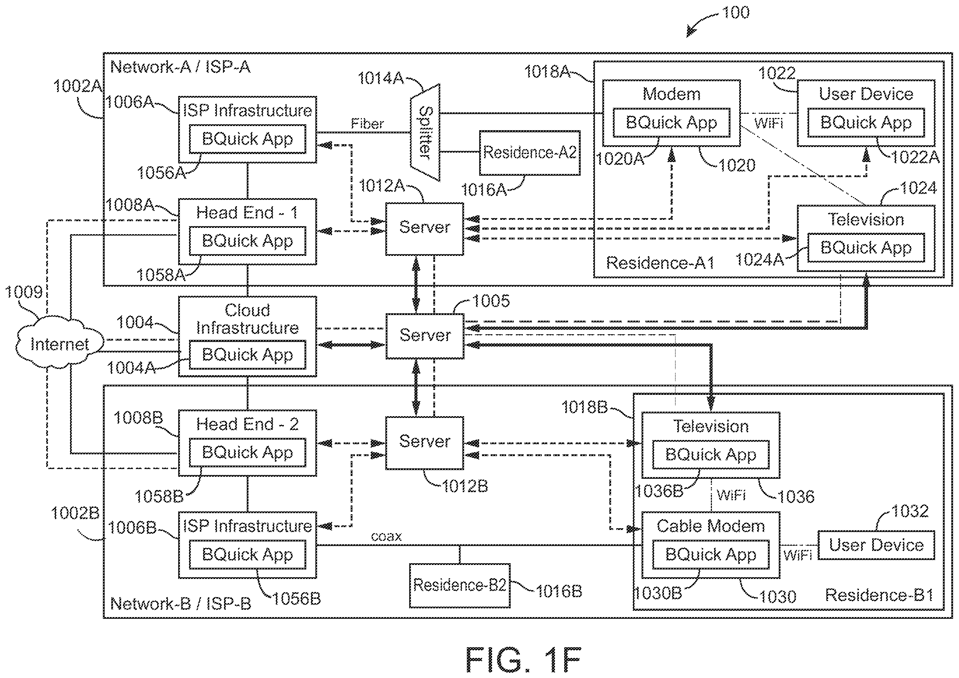

With reference to FIG. 1F, cloud infrastructure 1004 can include an application 1004A. Application 1004A is similar to applications 1030B, 1031B, 1036B, 1074B 1032B, 1034B, 1035B, 1056B, and 1058B. BQUICK TOP server 1012 can be configured to monitor AR/VR applications and/or metaverse applications. An application executed on BQUICK TOP server 1012 can perform the monitoring functions. Application 1004A is in communication with BQUICK TOP server 1012. Servers 1012A and 1012B can include an application similar to application 1004A.

Using applications 1020A, 1024A, 1030B, 1032B, 1034B, 1035B, 1036B, 137A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 137A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

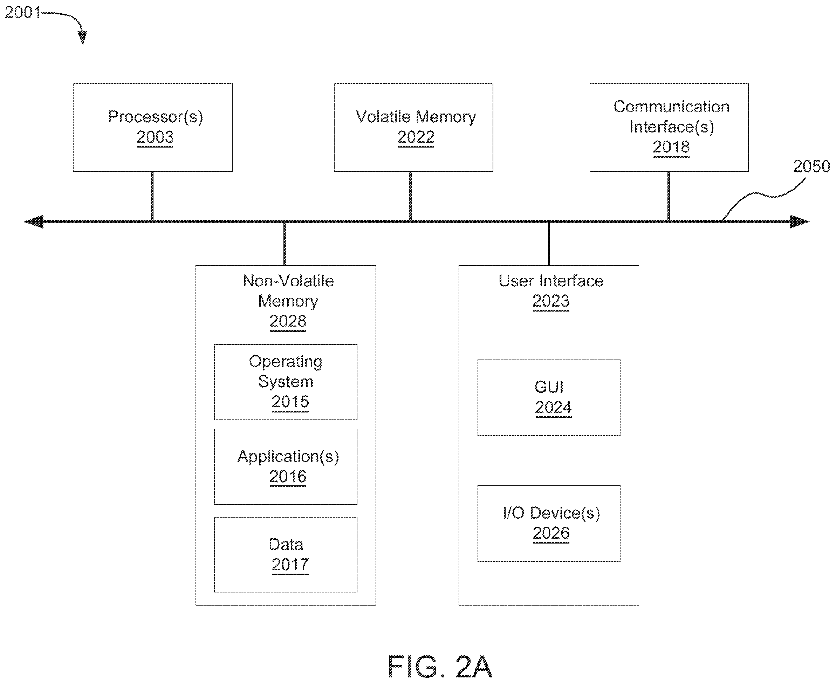

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, a remote control, a video game controller, or joystick, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001, as shown in FIG. 2A, is shown merely as an example. Clients, servers, intermediary devices, and other networking devices may be implemented by any computing or processing environment and with any type of machine or set of machines that may have suitable hardware and/or software capable of operating, as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

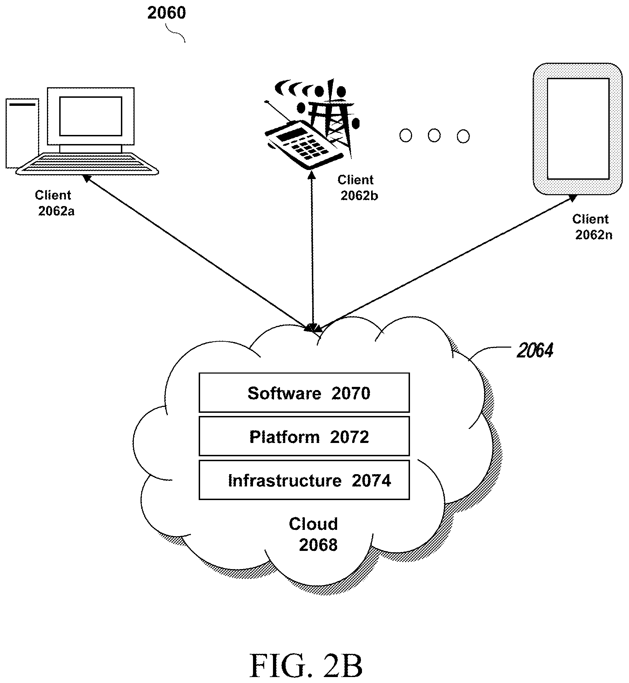

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but are not limited to, networks, network bandwidth, servers, processing, memory, storage, applications, virtual machines, databases, software, hardware, analytics, and intelligence.

In some embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In some embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include infrastructure as a service (IaaS). The computing environment 2060 can include platform as a service (PaaS). The computing environment 2060 can include serverless computing. The computing environment 2060 can include software as a service (SaaS). For example, the cloud 2068 may also include a cloud based delivery, e.g., software as a service (SaaS) 2070, platform as a service (PaaS) 2072, and infrastructure as a service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, google compute engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use various wireless communication devices. For example, multiple-unit communication interfaces associated with cellular networks, satellite communications, vehicle communication networks, wired networks, and networks can utilize the systems and methods described herein without departing from the scope of the systems and methods described herein.

### D. Systems and Methods for Bandwidth Allocation in a Passive Optical Network

Below are detailed descriptions of various concepts related to, and embodiments of, techniques, approaches, methods, apparatuses, and systems for bandwidth allocation in a passive optical network. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein can address the challenges of bandwidth allocation in passive optical networks (PONs). An optical line terminal (OLT) in communication with one or more optical network terminals (ONTs) can manage the bandwidth allocation dynamically. The dynamic bandwidth allocation (DBA) engine, configured within the OLT, can allocate a constant bit rate (CBR) bandwidth from the upstream bandwidth capacity of the PON. The CBA bandwidth allocation can be responsive to the registration of one or more transmission containers by the associated ONTs. The transmission containers can be used by the ONTs for specific low latency applications or CBR applications. The OLT can receive an indication of the status of a low latency application or a CBR application. The status update can allow the OLT to dynamically manage bandwidth allocation among ONTs. The OLT can communicate the updated bandwidth map to one or more ONTs, such that each ONT can receive the appropriate bandwidth allocation to support its operations, particularly for low latency applications or CBR applications. By managing and updating the bandwidth allocations dynamically, the technical solutions disclosed herein can increase the efficiency and responsiveness of the network to the varying demands of connected devices.

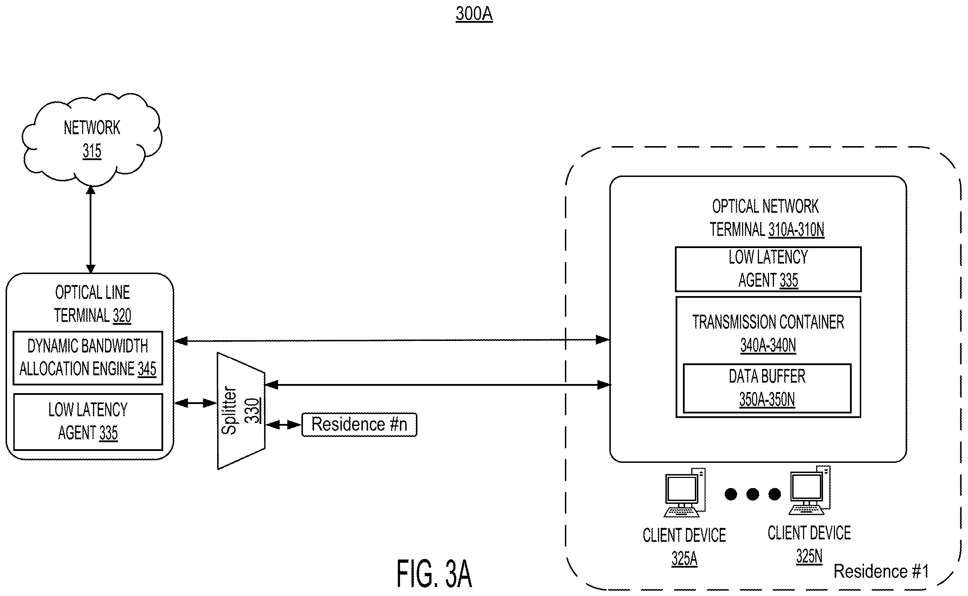

FIG. 3A illustrates an example system 300A for dynamic switching between latency sensitive and bandwidth efficient modes in a passive optical network (PON), such as a GPON (gigabit passive optical network). Example system 300A can include one or more optical network terminals (ONTs) 310A-310N (sometimes referred to herein as an optical network terminal 310) coupled with one or more optical line terminals (OLTs) 320 via one or more splitters 330. The example system 300A can include one or more client devices 325A-3325N (sometimes referred to herein as a client device 325) communicatively coupled with one or more ONTs 310. The OLT 320 can receive data streams from internet via one or more networks 315. Any of the systems described in connection with FIGS. 1A-1F and 2A-2B can be configured, constructed, or implemented to implement, operate, and/or use any of the options and techniques described in FIG. 3A.

A PON is a fiber-optic telecommunications technology that uses optical splitters to deliver data from a single central point to multiple end-users. This point-to-multipoint architecture allows internet service providers (ISPs) to serve numerous customers using a single optical fiber. PONs are commonly used for the last mile connection between the ISP and residential or business subscribers, providing high-speed internet access. A PON can include an EPON (ethernet passive optical network) or a GPON (gigabit passive optical network), among others. EPON is a type of PON that uses Ethernet technology for data transmission. EPON can provide a simpler and more cost-effective solution compared to GPON. EPON is commonly used in areas with lower bandwidth requirements or where cost is a primary concern. GPON is a high-speed PON technology capable of delivering data rates up to 2.4 Gbps downstream and 1.2 Gbps upstream. GPON can be preferred in areas with high bandwidth demands and where quality of service (QoS) is important.

The ONT 310 can include one or more transmission containers 340A-340N (sometimes referred to herein as a transmission container 340). The transmission containers can include one or more data buffers 350A-350N (sometimes referred to herein as a data buffer 350). The ONT 310 can be located at a particular residence, such as residence #1 in this example. The OLT 320 can include one or more dynamic bandwidth allocation engines 345. The ONT 310 and OLT 320 can include one or more low latency agents 335. The low latency agent 335 can be the same version or different versions of the low latency agent.

The ONT 310 can include a device, system, or module (including a combination of hardware and software) that converts the optical signal received from the service provider's network (via fiber optic cable) into an electrical signal, and vice versa. The ONT 310 can provide multiple end users at a residence with access to a PON, for example, a GPON (gigabit passive optical network). The ONT 310 can, for example, connect to a wired Ethernet connection and provide wireless connections using radio frequency links, functioning as a wireless access point. The ONT 310 can be implemented (e.g., configured, designed, and/or built) for operating on a wireless local area network (WLAN). In some embodiments, the ONT 310 can be configured to provide routing capabilities. The ONT 310 can be implemented to support a standard for sending and receiving data using one or more radio frequencies. Those standards, and the frequencies they use can be defined by the IEEE (e.g., IEEE 802.11 standards). The ONT 310 can be configured to support Internet hotspots and/or extend the network's Wi-Fi signal range.

The OLT 320 can include a device, system, or module (comprising both hardware and software) that receives electrical signals from a service provider's network and converts them into optical signals for transmission over fiber optic cables. The OLT 320 can aggregate the optical signals from ONTs 310 into a single multiplexed beam of light, which can be converted into an electrical signal. The OLT 320 can be located at the service provider's central office or exchange. The OLT 320 can be configured to terminate fiber optic cables from customer locations. The OLT 320 can manage data communication between the service provider's network and multiple ONTs 310. For example, the OLT 320 can be configured to manage upstream traffic (data sent from customer locations) and downstream traffic (data received by customer locations). The OLT 320 can be configured to operate within local and/or metropolitan area networks (MANs). In some embodiments, the OLT 320 can provide network management features such as traffic shaping and quality of service (QoS) management. The OLT 320 can be configured to manage network scalability and support additional services such as internet protocol television (IPTV) or voice over the internet (VoIP) to improve the network's capabilities.

In some embodiments, the OLT 320 can receive data streams from the service provider's core network via network 315. The network 315, e.g., similar to the network 2064 described in connection with FIG. 2B, can include computer networks such as the Internet, local, wide, metro, or other area networks, intranets, satellite networks, other computer networks such as voice or data mobile phone communication networks, and combinations thereof.

The splitter 330, e.g., similar to the splitter 1014A described in connection with FIG. 1A, can include a device, system, or module that facilitates a single point-to-multi-point fiber network connection. The splitter 330 can function as a traffic hub between the OLT 320 and ONTs 310, which can be located in multiple residences. The splitter 330 can be used to aggregate or multiplex fiber optic signals to a single upstream fiber optical cable. The splitter 330 can split the power of an incoming optical signal from the OLT 320 to distribute it among various ONTs 310. The number of outputs the splitter 330 can have varies depending on its design, with common configurations such as 1x2 (one input, two outputs), 1x4 (one input, four outputs), and more for specific applications.

The client device 325 can be a wireless communication device configured for wireless communication in wireless communication networks, such as a LAN, WAN, or cellular network. The client device 325 can be configured to communicate wirelessly with network devices, such as the ONT 310, using any of the IEEE standards (e.g., IEEE 802.11 standards). The client device 325 can be any of the user devices described in connection with FIGS. 1A-1F. In some embodiments, the client devices 325 can include one or more clients 2062, as described in FIG. 2B, and/or one or more client devices connected to the network 315 or the network 2064 to access resources or services. In some embodiments, the client device 325 (e.g., computers, set-top boxes, AR/VR sets, or gaming consoles) can establish a wired connection with the ONT 310, using either Ethernet or coaxial cables.

The low latency agent 335 can include any combination of hardware and software for identifying, managing, and controlling low latency applications. The low latency agent 335 can provide localized management at the ONT 310 and/or OLT 320 level. In some embodiments, the low latency agent 335 can provide rapid identification and classification of data packets associated with low latency applications using predefined markers, protocols, and detailed packet information, such as tuples, headers, and content, among others.

The transmission container (TCONT) 340 can be or include any script, file, program, application, set of instructions, or computer-executable code that is configured to separate and isolate different types of traffic streams within the GPON network. The TCONT 340 is a logical entity within the ONT 310 that encapsulates and carries a specific type of traffic. The TCONT 340 can function as a virtual container for isolating and managing different data flows within the ONT 310. By segregating traffic into TCONTs 340, the ONT 310 can allocate bandwidth and implement QoS policies for various applications. Each TCONT 340 can be configured to use time slots allocated by the OLT 320 for transmitting upstream data traffic. Each TCONT 340 can include or associate with one or more data buffers 350A-350N (sometimes referred to herein as a data buffer 350) that carry a specific type of data, such as voice, video, or data services. Each TCONT 340 can have associated data queues that include the data buffers 350. A data queue can be the storage of a list of data items in a buffer or data structure, such as an ordered list of data items comprising packets. The data queue can be a linear data structure that stores a collection of data items. The data queue can function as a buffer for holding data packets before they are transmitted. Each TCONT 340 can be configured with specific QoS parameters, such as priority or bandwidth allocation.

Each ONT 310 can have its own set of TCONTs 340 for managing its traffic. Each ONT 310 can register the associated TCONTs 340 with the OLT 320 during the initialization process or upon the creation of a new TCONT 340. The initialization process in a PON refers to the initial setup and configuration of the ONT 310 when it is first powered on or connected to the network. This process can involve establishing communication with the OLT 320 by discovering the OLT's presence and establishing a communication link. The ONT 310 can undergo authentication and authorization, verifying its identity with the OLT 320 and obtaining permissions to access the network. The ONT 310 can receive initial configuration parameters from the OLT 320, such as bandwidth allocation, QoS settings, and other operational parameters. The TCONT registration can be a subsequent step where the ONT 310 informs the OLT 320 about the creation of new TCONTs 340 or modifications to existing ones. This process can be useful for the OLT 320 to maintain an updated view of the network topology and allocate resources accordingly. During initialization, TCONTs 340 that are preconfigured for basic operation can be registered during the initial setup process. Upon creation, new TCONTs 340 created dynamically, such as for on-demand services, can be registered at the time of their creation. Each TCONT 340 within the ONT 310 can be configured to facilitate bandwidth allocation to the corresponding ONT 310 connected to the OLT 320. For example, the TCONT 340 can be assigned an Alloc_ID to help in identifying and addressing the ONT 310 connected to the OLT 320.

The dynamic bandwidth allocation (DBA) engine 345 can be or include any script, file, program, application, set of instructions, or computer-executable code that is configured to adjust the available bandwidth. The DBA engine 345 can monitor network traffic and allocate bandwidth to the ONT 310 to prevent congestion. The DBA engine 345 can determine how bandwidth is being utilized by different devices (TCONTs or ONTs) connected to the OLT 320. The DBA engine 345 can use predefined configuration parameters, such as QoS requirements, for example, for low latency applications when allocating bandwidth.

The DBA engine 345 can be configured to generate and maintain a bandwidth (BW) map. A bandwidth map can refer to a visual representation that illustrates the distribution and availability of network bandwidth across different segments or components. The BW map can function as a dynamical schedule that specifies upstream bandwidth allocation for each connected TCONT 340 associated with a particular ONT 310. Based on the BW map, the DBA engine 345 can assign specific time slots and frame structures to each TCONT for transmitting data frames upstream to the OLT 320. The DBA engine 345 can communicate the BW map or the updated BW map to the connected ONTs 310. Each ONT 310 can be configured to transmit its data frames upstream during its assigned time slots, according to the BW map. The DBA engine 345 can be configured to assign an Alloc_ID to each connected ONT 310. The Alloc_ID can function as an identifier for the ONT 310 within the PON. The Alloc_ID can allow the OLT 320 to identify specific ONTs 310 when communicating with individual ONTs 310 for control or configuration purposes.

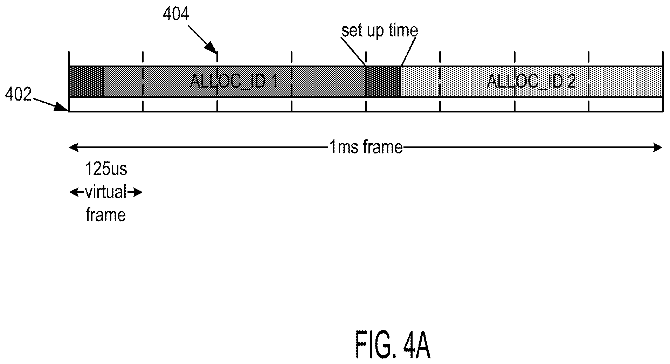

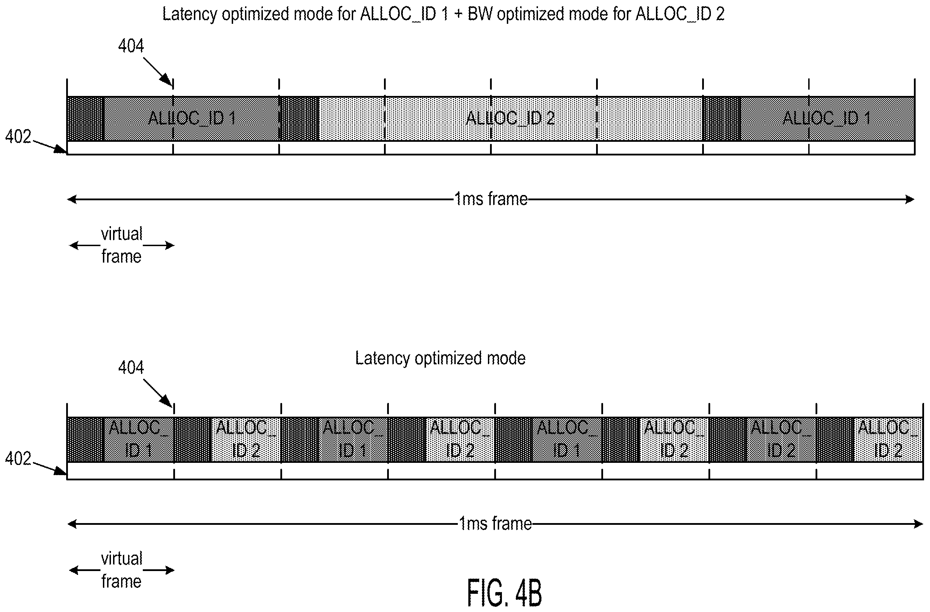

In some embodiments, the OLT 320 or the DBA engine 345 can allow multiple devices to share a single frame of data transmission. As shown in connection with FIG. 4A, two ONTs 310 can be configured to use the same frame 402 to avoid collisions or interference. For example, the first ONT 310, associated with Alloc_ID 1, can transmit its data during the first part of the frame 402, and the second ONT 310, associated with Alloc_ID 2, can transmit its data during the remaining portion of the same frame 402. The duration of each frame 402 can be 1 millisecond. In some embodiments, the shared frame 402 can be divided into a number of smaller virtual frames 404. The duration of each virtual frame 404 can be 125 microseconds. In some embodiments, the duration of each virtual frame 404 can be determined by the latency requirement requested by the ONT 310 associated with a particular Alloc_ID, as shown in connection with FIG. 4B.

FIG. 4B, for example, illustrates how the DBA engine 345 allocates virtual frames 404 to ONTs 310 identified by their respective Alloc_IDs. In the latency optimized mode for Alloc_ID 1, the DBA engine 345 can be configured to prioritize minimizing the time delay (e.g., latency) experienced by the ONT 310 associated with Alloc_ID 1 during data transmission. As shown, the Alloc_ID 1 can be provided with frequent opportunities to transmit data. For example, the DBA engine 345 can allocate virtual frames 404 or time slots to Alloc_ID 1 at the beginning and periodically throughout the main frame 402 to minimize waiting times. In the BW optimized mode for Alloc_ID 2, the DBA engine 345 can be configured to maximize data transmission capacity. For example, the DBA engine 345 can allocate one or more consecutive virtual frames 404 to Alloc_ID 2, allowing the corresponding ONT 310 to transmit more data during these consecutive time slots. In some embodiments, where both Alloc_ID 1 and Alloc_ID 2 are configured for the latency optimized mode, the DBA engine 345 can be configured to divide the 1 ms main frame 402 into multiple virtual frames 404. The DBA engine 345 can distribute these virtual frames 404 periodically between Alloc_ID 1 and Alloc_ID 2, such that each corresponding ONT 310 can transmit data more frequently within the frame 402, reducing the time each ONT 310 has to wait before transmitting its data associated with low latency applications.

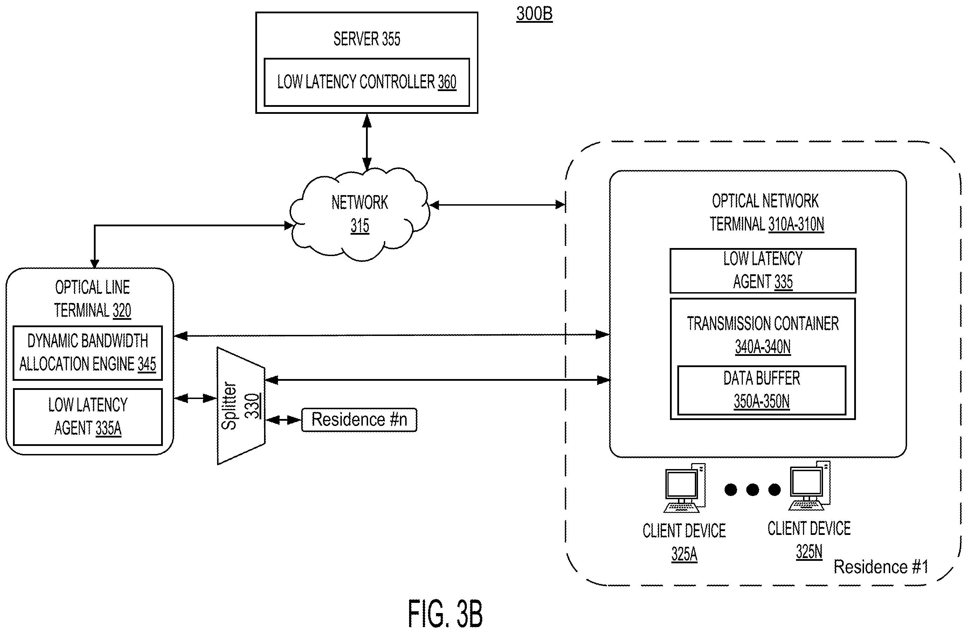

FIG. 3B illustrates an example system 300B for pushing partial data upstream in a passive optical network. The example system 300B can include one or more ONTs 310 and one or more OLTs 320, coupled with one another via one or more splitters 330. Various components of the system 300B shown in FIG. 3B may be similar to, and include any of the structure and functionality of, the system 300A of FIG. 3A. For example, the network 315 shown in FIG. 3B is similar to the network 315 in FIG. 3A, differing only in its role of facilitating a connection between the ONT 310 and OLT 320. The components of the ONT 310 and OLT 320 may include some or all of the structure and functionality of their specific counterparts in FIG. 3A.

The example system 300B can further include one or more servers 355. The server 355 can be referred to herein as the latency server, such as the latency server 1005, as described in connection with FIGS. 1A-1F. In some embodiments, a low latency controller 360 (or a subset of its functionalities) can be integrated into the server 355. The server 355 and/or the low latency controller 360 can be configured to communicate with the ONT 310, OLT 320, or other client devices 325 via the network 315.

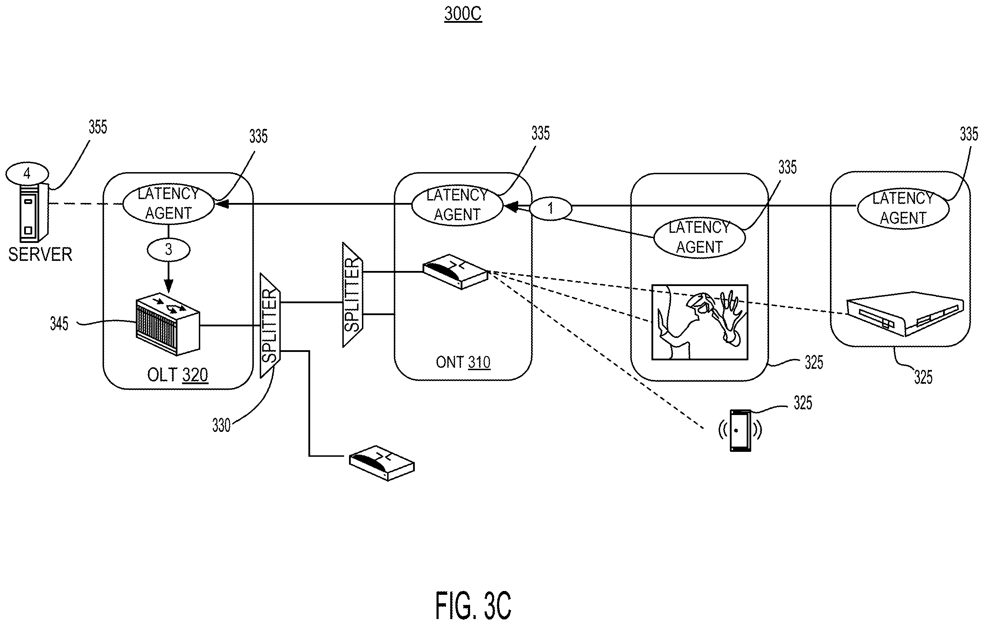

FIGS. 3C-3E illustrate example systems 300C-300E for dynamic constant bit rate (CBR) bandwidth allocation in a passive optical network (PON). The example systems 300C-300E can include one or more ONTs 310 and one or more OLTs 320, coupled with one another via one or more splitters 330. Various components of the systems 300C-300E shown in FIGS. 3C-3E may be similar to, and include any of the structure and functionality of, the systems 300A of FIG. 3A or 300B of FIG. 3B. For example, the server 355 shown in FIGS. 3C-3E is similar to the server 355 in FIG. 3B. The components of the ONT 310 and OLT 320 may include some or all of the structure and functionality of their specific counterparts in FIGS. 3A-3B.

As shown in FIG. 3C, the client devices 325 within a single household can communicate low latency application requirements (e.g., via a low latency agent 335) to the ONT 310. The ONT 310 can continuously update these low latency requirements (e.g., via the low latency agent 335) to the OLT 320. The low latency agent 335, residing within the OLT 320, can provide input to a dynamic bandwidth allocation (DBA) engine 345 to enable or disable CBR bandwidth for a particular ONT 310. CBR is a transmission technique used in telecommunications and networking. CBR can maintain a steady data rate throughout the transmission process. CBR can be useful for applications desiring predictable and reliable data transfers, such as voice and video. In this example implementation, the server 355 is not directly involved in enabling or disabling CBR.

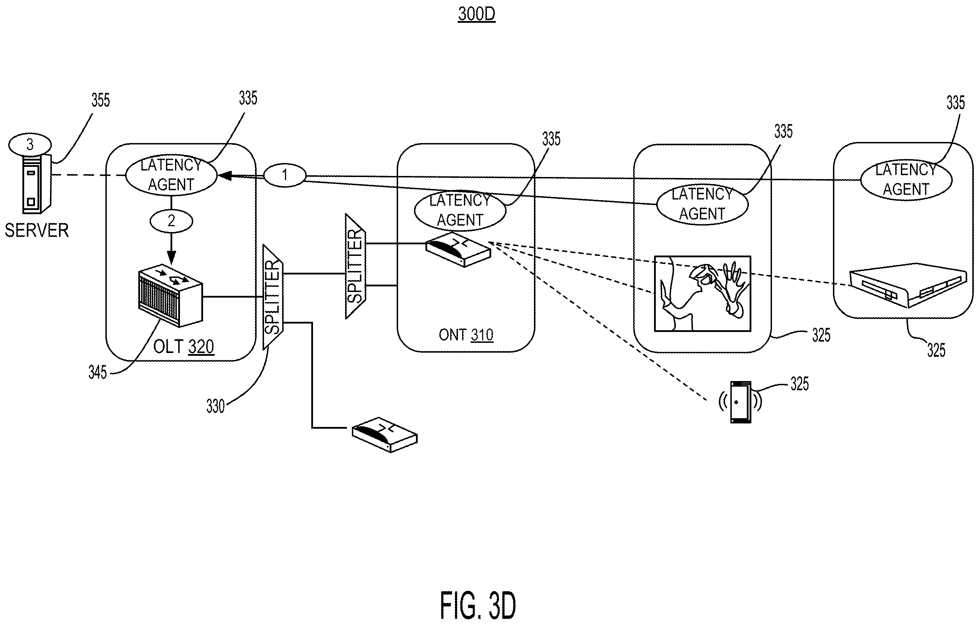

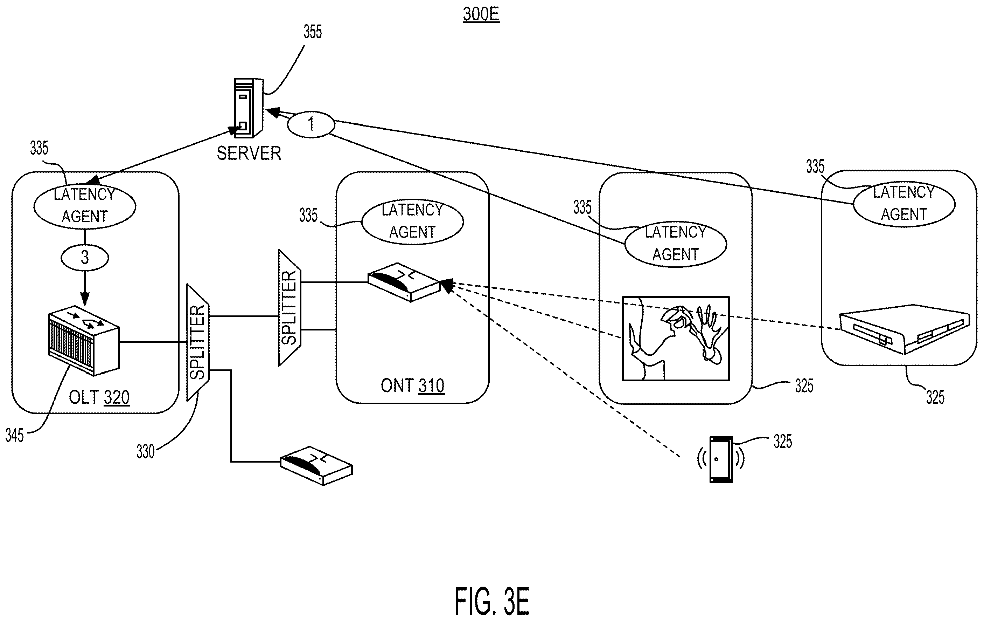

In FIG. 3D, the client devices 325 within a single household can directly communicate low latency application requirements (e.g., via the low latency agent, the low latency application, or the CBR application) to the OLT 320. The low latency agent 335, residing within the OLT 320, can provide input to the dynamic bandwidth allocation engine 345 to enable or disable CBR bandwidth for a particular ONT 310. In this example implementation, the server 355 is not directly involved in enabling or disabling CBR. In FIG. 3E, the client devices 325 within a single household can directly communicate low latency application requirements to the server 355. A low latency controller 360, residing within the server 355, can provide input to the OLT 320. Based on the received input, the OLT 320, via the dynamic bandwidth allocation engine 345, can enable or disable CBR bandwidth for a particular ONT 310.

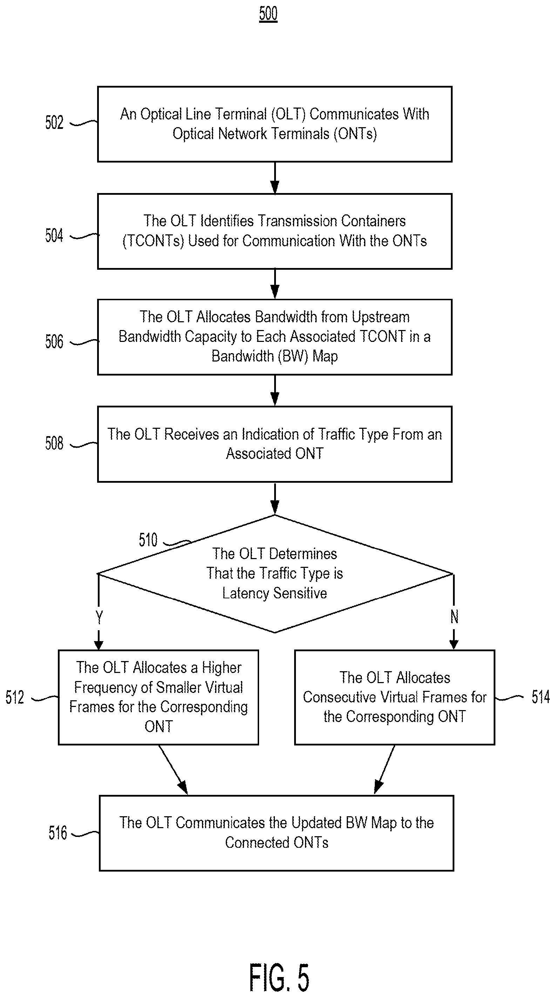

FIG. 5 illustrates a method 500 of dynamic switching between latency sensitive and bandwidth efficient modes in a passive optical network (PON). The method 500 can be implemented using a system 100, 300, or any other features discussed in FIGS. 1-3. The method 500 can include acts 502-516. At 502, an optical line terminal (OLT) can communicate with optical network terminals (ONTs). At 504, the OLT can identify transmission containers (TCONTs) used for communication with the ONTs. At 506, the OLT can allocate bandwidth from upstream bandwidth capacity to each associated TCONT in a bandwidth (BW) map. At 508, the OLT can receive an indication of traffic type from an associated ONT. At 510, the OLT can determine that the traffic type is latency sensitive. At 512, the OLT can allocate a higher frequency of smaller virtual frames for the corresponding ONT if the OLT determines that the traffic type is latency sensitive. At 514, the OLT can allocate consecutive virtual frames for the corresponding ONT if the OLT determines that the traffic type is not latency sensitive. At 516, the OLT can communicate the updated BW map to the connected ONTs.

At 502, the OLT can communicate with ONTs. The OLT can communicate with ONTs using standardized protocols, such as GPON (gigabit passive optical network), which can define message formats and procedures for control functions. In some embodiments, the OLT can be physically installed in a central office or data center, and the ONT can be installed at the customer's premises. In some embodiments, the connection between the OLT and ONT can be established using fiber optic cables, which can transmit data using pulses of light. For example, the network can use fiber optic cables that run from the OLT to a passive optical splitter, which can split the signal from the OLT to serve multiple ONTs. The ONT can be configured to receive the messages and respond.

At 504, the OLT can identify TCONTs used for communication with the ONTs. The TCONTs (also referred to as traffic bearing entities) can be logical channels within the PON and can function as virtual pipelines within the fiber optic connection. When an ONT wants to transmit data upstream to the OLT, the ONT can place the data packets into the TCONT based on the type of traffic (e.g., voice data, video data, etc.). During the initialization process, the OLT, via a dynamic bandwidth allocation engine (DBA), can assign an identifier, for example, an Alloc_ID, to each connected ONT within the network. The Alloc_ID can be used to distinguish each associated ONT. Each TCONT used for communication with a specific ONT can be associated with the Alloc_ID assigned to that particular ONT. The OLT can use the association to identify which TCONT belongs to which ONT when managing traffic and allocating bandwidth via the DBA. For example, the Alloc_ID assigned to each ONT during the initial network setup can allow the OLT to determine the number of TCONTs instances supported by a given ONT.

At 506, the OLT can allocate bandwidth from upstream bandwidth capacity to the identified TCONTs in the BW map. Upstream bandwidth capacity is the maximum data transfer rate from a device to a network or the internet. The upstream bandwidth capacity can determine the speed at which data, such as video uploads or file transfers, can be sent from end-user devices. The BW map can be a data structure maintained by the OLT. In some embodiments, the BW map can be used as a framework to define how the upstream bandwidth is divided among the TCONTs supported by one or more ONTs within a network. The OLT, via the DBA, can use the BW map to allocate specific slots to each TCONT within the ONT based on traffic demands or user configurations. The slots can indicate the time periods during which each ONT, via the associated TCONT, can transmit its data upstream to the OLT. In some embodiments, the network can be configured to employ time division multiple access (TDMA) for upstream bandwidth allocation. For example, the TDMA can divide time on a single channel, allowing multiple ONTs to access the upstream bandwidth.

At 508, the OLT can receive an indication of traffic type from an associated ONT. An indication refers to specific signals or measurements that provide information about the network's performance or connectivity. In this regard, the indication can refer to a signal that one device (the ONT) sends to another (the OLT) to convey specific data about network traffic or application behavior. In some embodiments, the OLT can receive the traffic type indication, for example, using a standardized signaling protocol established between the OLT and the ONT. The signaling protocol can allow the ONT to transmit a signal indicating the type of traffic the corresponding ONT is currently generating (e.g., latency sensitive or real-time insensitive). In some embodiments, the OLT can process the data packets received within the frames from the ONT. For example, the OLT can process the data packets based on factors such as packet size, inter-packet arrival times, or header information, to determine the traffic type. In some embodiments, the OLT can receive traffic type information directly from the applications running on the user's device connected to the ONT.

At 510, the OLT can determine that the traffic type is latency sensitive. The OLT can use the traffic type information received from the ONT to determine if the traffic is latency sensitive. For example, if a standardized signaling protocol is used, the OLT can directly interpret the signal received from the ONT to identify it as latency sensitive. In some embodiments, if traffic analysis is involved, a constant stream of small packets can indicate real-time voice or video traffic (latency sensitive). In some embodiments, short inter-packet arrival times can indicate real-time traffic. Some embodiments can include header information indicating the traffic type.

At 512, the OLT can allocate a higher frequency of smaller virtual frames for the corresponding ONT if the OLT determines that the traffic type is latency sensitive. The OLT can divide the main frame (e.g., a 1 ms frame) into smaller logical units referred to as virtual frames. Each virtual frame can indicate a dedicated time slot within the main frame for data transmission from a specific ONT. When the OLT identifies latency sensitive traffic for an ONT, the OLT, via the DBA, can allocate a higher frequency of smaller virtual frames to that specific ONT in the BW map. For example, the OLT can be configured to create short bursts of data to be transmitted more frequently by allocating a higher frequency of virtual frames. In some embodiments, the use of smaller virtual frames can contribute to reduced latency. For example, smaller frames can take less time to transmit compared to larger frames, minimizing delays for latency sensitive traffic.

At 514, the OLT can allocate consecutive virtual frames for the corresponding ONT if the OLT determines that the traffic type is not latency sensitive. Real-time insensitive traffic can include bulk data transfers, such as file downloads, where occasional delays are less important. The OLT can be configured to allocate a single larger virtual frame to the corresponding ONT in the BW map by aggregating a number of consecutive virtual frames. In this regard, larger virtual frames can be more efficient for bulk data transfers. For example, because non-latency traffic deals with large amounts of data, allocating bigger time slots can allow for transmitting more data per frame.

At 516, the OLT can communicate the updated BW map to the connected ONTs. The OLT can transmit the updated BW map to the connected ONTs, allowing the ONTs to be aware of the changes in their allocated bandwidth, including the number and size of virtual frames assigned for latency sensitive and bulk transfer traffic. Based on the received information, the connected ONTs can adjust their transmission behavior accordingly, such as by adapting their packet scheduling or queue management strategies. In this manner, the connected ONTs can have a consistent view of the current bandwidth allocation scheme.

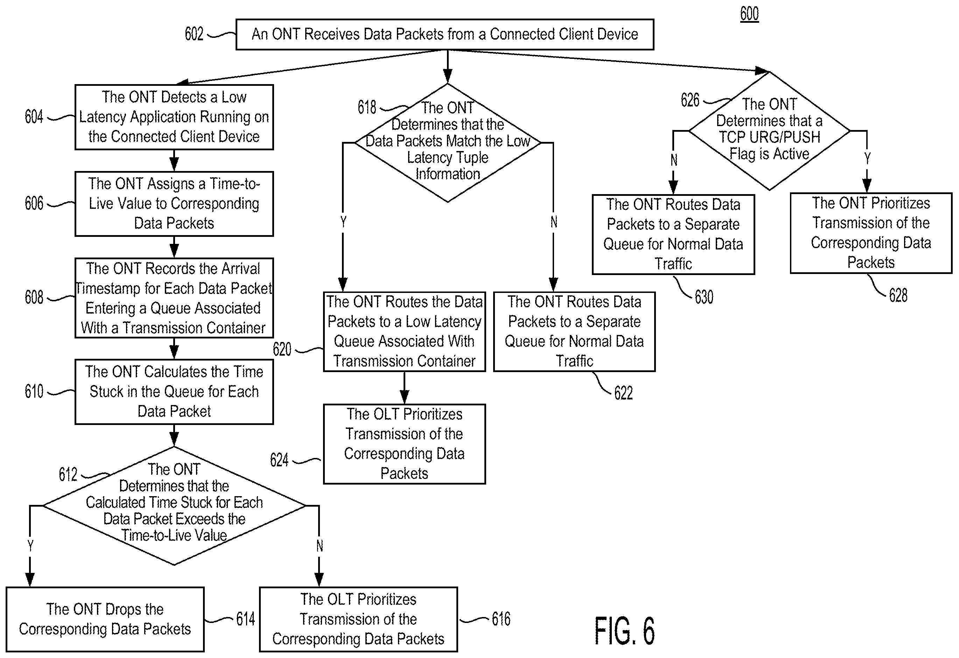

FIG. 6 illustrates a method 600 of pushing partial data upstream in a passive optical network. The method 600 can be implemented using a system 100, 300, or any other features discussed in FIGS. 1-3. The method 600 can include acts 602-616. At 602, an ONT can receive data packets from a connected client device. At 604, the ONT can detect a low latency application running on the connected client device. At 606, the ONT can assign a time-to-live value to corresponding data packets. At 608, the ONT can record the arrival timestamp for each data packet entering a queue associated with a transmission container. At 610, the ONT can calculate the time stuck in the queue associated with the transmission container for each data packet. At 612, the ONT can determine that the calculated time stuck for each data packet exceeds the time-to-live value. At 614, the ONT can drop the corresponding data packets if their calculated time stuck exceeds the corresponding time-to-live values. At 616, the OLT can prioritize transmission of the corresponding data packets if their calculated time stuck does not exceed the corresponding time-to-live values.

At 602, the ONT can receive data packets from a connected client device. The client devices (e.g., gaming consoles, PCs, etc.) can transmit data to the ONT, for example, via wired or wireless connections. Wired connections can use Ethernet cables, and wireless connections can use Wi-Fi protocols. The ONT can convert the data received from the connected client device into optical signals. The ONT can transmit the optical signals to the OLT through a fiber optic cable. The OLT can facilitate communication between client devices and external internet resources. For example, the OLT can direct the data packets to the internet backbone. Data from the internet can be transmitted back to the ONT via the OLT, where the data can be converted from optical to electrical signals and transmitted to the client devices.

At 604, the ONT can detect the low latency application running on the connected client device. The ONT can process the data packets of the connected client device, via a low latency agent, to detect low latency applications. The packets can include, but are not limited to, predefined markers, tuple information, and header information, which the ONT can process to detect any low latency application running on the client device. In some embodiments, the low latency agent within the ONT can communicate with a latency controller, running on a server in the network, to receive identifications of low latency applications traversing the network. For instance, the low latency controller can communicate the low latency 5-tuple information to the ONT.

At 606, the ONT can assign the time-to-live value to corresponding data packets. The ONT can assign the time-to-live (TTL) value to each data packet associated with low latency applications. The TTL value can represent a time duration (e.g., X milliseconds). The TTL value can indicate how long a data packet can exist on a network, computer, or server before being discarded.

At 608, the ONT can record the arrival timestamp for each data packet entering the queue associated with the transmission container. A queue can be the storage of a list of data items in a buffer or data structure, such as an ordered list of data items comprising packets. The queue can function as a buffer for holding data packets before they are transmitted. The ONT can use packet timestamping for each data packet stored in the queue associated with the transmission container to determine the arrival timestamp of the corresponding data packets. The arrival timestamps can indicate when each data packet arrived at the ONT. In some embodiments, the ONT can use the current system time to obtain a current timestamp as a reference point. The current timestamp can be obtained from a network synchronization source, an internal clock within the ONT, or from another device the ONT interacts with.

At 610, the ONT can calculate the time stuck in the queue associated with the transmission container for each data packet. The ONT can be configured to determine the time stuck for each data packet by subtracting the arrival timestamp from the current timestamp. In this manner, the ONT can determine how long each data packet has been waiting in the associated queue. The ONT can compare the calculated time stuck value for each packet against its corresponding TTL value. For example, the ONT can be configured to assess how long a packet has been in the network relative to the corresponding TTL value.

At 612, the ONT can determine that the calculated time stuck for each data packet exceeds the time-to-live value. For example, to avoid delays and routing issues, the ONT can determine whether the corresponding data packet has experienced a delay within the network. At 614, the ONT can drop the corresponding data packets if their calculated time stuck exceeds the corresponding TTL values. At 616, the OLT can prioritize transmission of the corresponding data packets if their calculated time stuck does not exceed the corresponding TTL values.

In some embodiments, the method 600 can include acts 618-624. At 618, the ONT can determine that the data packets match the low latency tuple information. At 620, the ONT can route the data packets to a low latency queue associated with the transmission container if the data packets match the low latency tuple information. At 622, the ONT can route data packets to a separate queue for normal data traffic if the data packets do not match the low latency tuple information. At 624, the OLT can prioritize transmission of the corresponding data packets that match the low latency information.

At 618, the ONT can determine that the data packets match the low latency tuple information. The ONT can be configured, via a low latency agent or a low latency controller, to process the headers of packets traversing the network to determine the 5-tuple information. The 5-tuple information can include the source and destination IP addresses, source and destination ports, and the protocol. By processing the fields within the headers, the ONT can be configured to detect low latency applications.

At 620, the ONT can route the data packets to a low latency queue associated with the transmission container if the data packets match the low latency tuple information. A queue can be a line of data packets waiting to be processed. A queue can be the storage of a list of data items in a buffer or data structure, such as an ordered list of data items comprising packets. Each queue can be configured with different priorities based on the needs of the data packets the corresponding queue manages. The routing to the low latency queue can be triggered in response to the detection of low latency applications. The low latency queue can be prioritized such that data packets within the low latency queue are serviced before other data packets in different queues.

At 622, the ONT can route data packets to a separate queue for normal data traffic if the data packets do not match the low latency tuple information. The standard queues associated with the transmission containers can be configured to manage less time-sensitive data (e.g., data packets from web browsing or email services), allowing the network to manage traffic by segregating urgent communications (such as video streaming, voice calls, online gaming, etc.) from more routine data transmissions.

At 624, the OLT can prioritize transmission of the corresponding data packets that match the low latency information. During the DBA process, the ONT can communicate the presence of low latency traffic in the ONT's queues (e.g., low latency queues) to the OLT. In some embodiments, the ONT can be configured to request transmission opportunities once a threshold is satisfied in the low latency queue. The ONT can channel resources for normal traffic, and the data traffic from low latency can make smaller transactions in the upstream data if desired. In some embodiments, the ONT can be configured to request transmission opportunities even if the low latency queue holds a single byte of data. The OLT can detect the presence of low latency traffic via a low latency controller on a server or a low latency agent residing within the OLT. Based on the received information about low-latency traffic, the OLT, via the DBA engine, can update the BW map to prioritize the transmission of data packets stored within the low latency queues. For example, the OLT can allocate more bandwidth or grant more frequent transmission opportunities to the data packets associated with low latency queues.

In some embodiments, the method 600 can include acts 626-630. At 626, the ONT can determine that a TCP URG/PUSH flag in the received data packets is active. At 628, the ONT can prioritize transmission of the corresponding data packets if the ONT identifies that the TCP URG/PUSH flag in the data packets is active. At 630, the ONT can route the data packets to a separate queue for normal data traffic if the ONT identifies that the TCP URG/PUSH flag in the data packets is not active.

At 626, the ONT can determine that the TCP URG/PUSH flag in the received data packets is active. A flag is a single bit within the header of a TCP segment (data packet), which can be used in communications. The ONT can process the TCP header to identify the TCP URG/PUSH flag. For example, the ONT can check the value of the flag bit. If the flag is set to '1', this can indicate the presence of the corresponding flag. If the flag is set to '0', this can indicate that the corresponding flag is not active. The presence of the TCP PUSH flag can signal that the sender of the data packet, such as a voice call application, is requesting that the ONT (or another receiver) immediately transmit the data included within the segment to the higher layer, such as the application layer, without waiting for the buffer to fill up completely. In some embodiments, the TCP URG flag can indicate the presence of urgent data within the TCP segment. The TCP URG flag can be used to bypass the queue in the data pipe.

At 628, the ONT can prioritize the transmission of the corresponding data packets if the ONT identifies that the TCP URG/PUSH flag in the data packets is active. For example, the ONT can place the corresponding data packets in low latency queues. In some embodiments, the ONT can bypass the queue in the data pipe to expedite transmission. In some embodiments, the ONT can request the OLT to allocate additional bandwidth or grant more frequent transmission opportunities to the corresponding data packets.

At 630, the ONT can route the data packets to a separate queue for normal data traffic if the ONT identifies that the TCP URG/PUSH flag in the data packets is not active. These standard queues can be configured for normal data traffic. The ONT can maintain efficiency for normal data traffic by preventing the corresponding data packets from being constantly overtaken by prioritized low latency data packets.

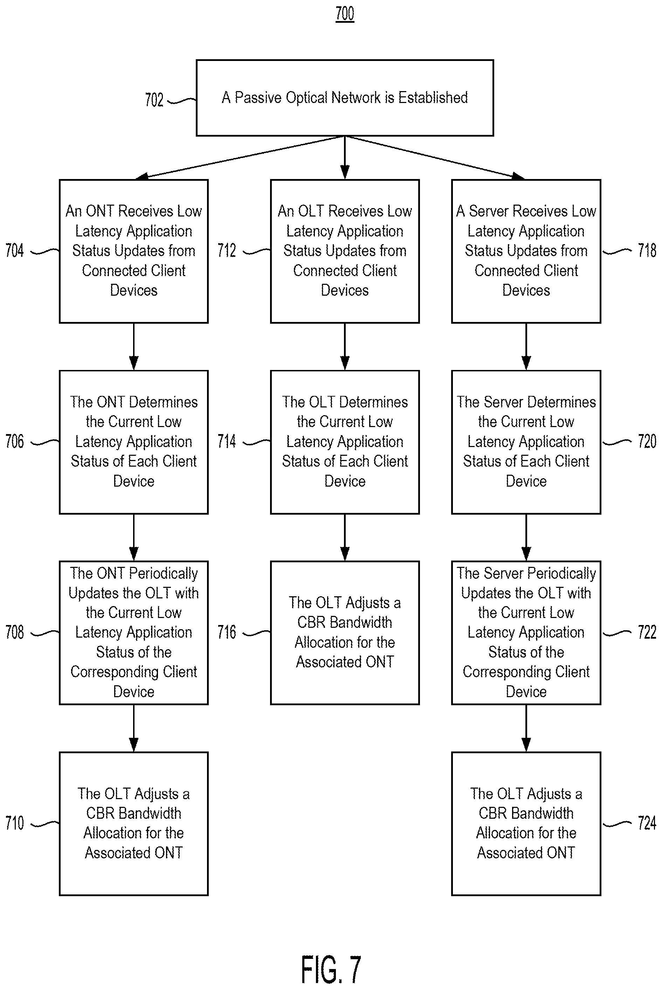

FIG. 7 illustrates a method 700 of dynamic constant bit rate bandwidth allocation in a passive optical network. The method 700 can be implemented using a system 100, 300, or any other features discussed in FIGS. 1-3. The method 700 can include acts 702-710. At 702, a passive optical network can be established. At 704, an ONT can receive low latency application status updates from connected client devices. At 706, the ONT can determine the current low latency application status of each client device. At 708, the ONT can periodically update the OLT with the current low latency application status of the corresponding client device. At 710, the OLT can adjust a CBR bandwidth allocation for the associated ONT.

At 702, the passive optical network can be established. For example, the configuration can include the installation of devices such as ONTs and OLTs. The ONTs can be connected to OLTs via fiber optic cables, which can facilitate high-speed data transmission and efficient signal distribution across the network. The ONTs can be connected to client devices through coaxial cables or Ethernet, depending on the implementation. In some embodiments, each ONT within the network can be configured with an integrated Wi-Fi access point to facilitate wireless connectivity with client devices.

At 704, the ONT can receive low latency application status updates from connected client devices. A status can refer to the current state or condition of a network component, application, or service. The status can provide information about the operational status, performance, or availability of a particular entity within the network. The operating systems of the client devices can be configured to include a flag or marker within the data packets generated by the low latency application. In some embodiments, the operating systems of the client devices can transmit control messages (e.g., through API calls or relevant protocols) to the ONT at regular intervals or upon detecting a low latency application. In some embodiments, a low latency agent or a latency controller can be deployed within the network to monitor the status of low latency applications or CBR applications on various ONTs and report the status to the ONT. In some embodiments, the ONT can receive an indication of the status of the application from the CBR application, for example, via the low latency agent. In the context of telecommunications and networking, a CBR application can refer to a data source that produces a continuous, steady stream of data. In some embodiments, an external low latency controller residing on another device or a server within the network can be used to report the status of CBR applications to the ONT.

At 706, the ONT can determine the current low latency application status of each client device. The ONT can be configured to maintain a status table to track the current low latency application status for each connected client device. The status table can include fields such as a device identifier, which identifies each device, and a low latency application status for each connected client device. The status field can have two states, open or closed. The status field can be set to open when the ONT detects an active low latency application associated with a client device. The status field can be set to closed when the ONT determines that the low latency application is not active or is not currently generating data. In some embodiments, the status field can include a flag (e.g., enabled/disabled). For example, the status field can be set to enabled when the ONT detects a low latency application associated with a client device. The status field can be set to disabled when the ONT detects that the low latency application is not active or that the low latency application is active but not generating data at that particular time period. In some embodiments, the ONT can further use information from Layer 2 (L2) flags within the data packets. The L2 flags can provide granular details about the data, such as indicating the end of a video or audio frame. By incorporating the L2 flag information into the status table, the ONT can be configured to achieve finer-grained prioritization within the low latency allocation. The ONT can continuously monitor data packets and dynamically update the status table, for example, toggling the status between enabled and disabled based on data activity.

At 708, the ONT can periodically update the OLT with the current low latency application status of the corresponding client device. For example, the ONT can periodically transmit messages to the OLT that include information about the current low latency application status of its connected client device. In some embodiments, the ONT can be configured to provide these status updates every 1-3 seconds. For example, when a user launches a video conference application, the ONT can activate a low latency (or CBR) pipe or queue for that session to allow the OLT to prioritize low latency applications.

At 710, the OLT can adjust the CBR bandwidth allocation for the associated ONT. The OLT can dynamically adjust the CBR bandwidth allocation for the associated ONT, for example, in response to receiving updates from the ONTs indicating active low latency applications. For instance, the OLT can adjust the CBR bandwidth allocation for an ONT in real-time based on changing network conditions or application requirements. In some embodiments, the OLT, via the DBA, can increase CBR bandwidth allocation for the corresponding ONT in the BW map if the OLT determines that the status of the low latency application or the CBR application is open. Increasing CBR bandwidth allocation can refer to the process of expanding the amount of network capacity dedicated to CBR traffic. For example, increasing CBR bandwidth allocation can include adjusting the bandwidth map to provide more resources for applications with stringent QoS requirements. The OLT, via the DBA, can increase the CBR bandwidth allocation for the corresponding ONT in the bandwidth BW map. In some embodiments, the DBA can split the original one millisecond frame length into smaller virtual frames. The duration of the virtual frames can be set based on the latency requirements requested by the ONT for the specific Alloc_ID. The OLT can be configured to allow frequent allocations for time-sensitive CBR traffic. In some embodiments, the OLT can switch the allocation scheme for the specific Alloc_ID to a latency optimized mode, which can reduce latency between allocations. In some embodiments, the OLT can manage other Alloc_IDs (e.g., non-CBR traffic that does not exhibit the constant bit rate characteristics of CBR traffic) for bandwidth efficiency by combining virtual slots for other traffic types into a single or a larger consecutive allocation.

In some embodiments, the OLT, via the DBA, can decrease CBR bandwidth allocation for the corresponding ONT in the BW map if the OLT determines that the status of the low latency application or the CBR application is not open (e.g., inactive). Decreasing CBR bandwidth allocation can refer to the process of reducing the amount of network capacity dedicated to CBR traffic. By decreasing the allocation, the OLT can take back the bandwidth that was previously reserved for the inactive low latency application. The configuration can free up bandwidth resources within the network. In some embodiments, the OLT can allocate the freed-up bandwidth to other traffic types, such as non-real-time data transfers, based on network demands. In some implementations, the freed-up bandwidth can be used to increase bandwidth allocation for other ONTs that have active traffic demands. In some embodiments, the OLT can dynamically monitor network traffic and application statuses, such as CBR applications. Based on predefined rules, quality of service (QoS) settings, and real-time needs, the OLT can automatically adjust bandwidth allocations in the BW map. In some embodiments, the ONTs can request additional bandwidth that can be triggered upon exceeding pre-allocated bandwidth limits or encountering unexpected traffic surges. The OLT, via the DBA, can process the requests based on available resources in the BW map and update the BW map to indicate the increased or decreased allocation for the connected ONTs.

In some embodiments, the method 700 can include acts 712-716. At 712, an OLT can receive low latency application status updates from connected client devices. At 714, the OLT can determine the current low latency application status of each client device. At 716, the OLT can adjust a CBR bandwidth allocation for the associated ONT.

At 712, the OLT can receive low latency application status updates from connected client devices. For example, client devices can directly communicate the associated low latency application requirements to the OLT. The OLT can include a low latency agent that can be configured to process communication from client devices regarding low latency applications. In some embodiments, the client devices can communicate with the OLT over a network configured to facilitate direct communication between client devices and OLTs. In some embodiments, the OLT can receive the indication of the status of the CBR application from the CBR application. In some embodiments, the OLT can receive the indication of the status of the CBR application from other sources, including client devices. In some embodiments, the OLT can receive the indication of the status of the CBR application from a low latency controller on another device. In some embodiments, the OLT can receive the indication of the status of the CBR application from a low latency agent. In some embodiments, the client devices can communicate with the low latency controller residing on a server. The low latency controller can facilitate direct communication between client devices and OLT over the network.

At 714, the OLT can determine the current low latency application status of each client device. The OLT can be configured with a low latency agent or a low latency controller to process the data packets and identify whether a low latency application associated with a client device is enabled or disabled. The enabled status can indicate that a low latency application is currently running on the client device. The disabled status can indicate that no low latency application is currently running on the client device or that any previously running application has been deactivated.

At 716, the OLT can adjust the CBR bandwidth allocation for the associated ONT. The OLT can dynamically adjust the CBR bandwidth allocation for the associated ONT, for example, in response to indicating active low latency applications. The OLT, via the DBA, can increase or decrease the CBR allocation for the associated ONT to effectively manage network traffic, as described above. In some embodiments, the OLT can be configured to incorporate a data structure, such as a table or database entry, to track the total amount of CBR bandwidth currently allocated to each ONT. In some embodiments, the OLT can be configured to use the data structure to map the Alloc_ID to specific low latency applications associated with that allocated bandwidth. The OLT can use the mapping to identify which applications are benefiting from the increased bandwidth when adjustments are made. In some embodiments, the OLT can communicate directly with applications (through the ONT) to notify them about exceeding bandwidth requests for the home network. This communication can be achieved through standardized signaling, for example, messages defined within the data packets can indicate bandwidth limitations. Applications or client devices can use these messages as notifications to modify their data transmission behaviors based on the available network bandwidth.

In some embodiments, the method 700 can include acts 718-724. At 718, a server can receive low latency application status updates from connected client devices. At 720, the server can determine the current low latency application status of each client device. At 722, the server can periodically update the OLT with the current low latency application status of the corresponding client device. At 724, the OLT can adjust a CBR bandwidth allocation for the associated ONT.

At 718, a server can receive low latency application status updates from connected client devices. For example, client devices can directly communicate the associated low latency application requirements to the server. In some embodiments, the client devices can communicate with the server over a network that facilitates direct communication between client devices and servers. In some embodiments, the client devices can communicate with a low latency controller residing on a server that can be configured to process communication from client devices regarding low latency applications. The low latency controller can facilitate direct communication between client devices and the server over the network.

At 720, the server can determine the current low latency application status of each client device. The server can include a low latency controller to process the data packets and identify whether a low latency application associated with a client device is enabled or disabled. The enabled status can indicate that a low latency application is currently running on the client device. The disabled status can indicate that no low latency application is currently running on the client device or that any previously running application has been deactivated.

At 722, the server can periodically update the OLT with the current low latency application status of the corresponding client device. For example, the server, via the low latency controller, can periodically transmit messages to the OLT that include information about the current low latency application status of the corresponding client device. In some embodiments, the server can be configured to provide these status updates every 1-3 seconds. For example, when a user launches a video conference application, the server can interact with the OLT to prioritize low latency applications.

At 724, the OLT can adjust the CBR bandwidth allocation for the associated ONT. The OLT can dynamically adjust the CBR bandwidth allocation for the particular ONT associated with the corresponding client device, for example, in response to receiving updates from the server indicating active low latency applications. The OLT, via the DBA, can increase or decrease the CBR allocation for the particular ONT to effectively manage network traffic, as described above.

It should be noted that certain passages of this disclosure may reference terms such as "first" and "second" in connection with devices, modes of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. That alternate embodiments may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A system (100, 300) comprising:
an optical line terminal, OLT, (320) of a passive optical network, PON, the OLT (320) in communication with one or more optical network terminals, ONTs (310);
a dynamic bandwidth allocation, DBA, engine (345) configured to allocate for one or more transmission containers (340) a constant bit rate, CBR, bandwidth from upstream bandwidth capacity of the PON responsive to registration of the one of the one or more transmission containers (340), each of the one or more transmission containers (340) to be used by an associated ONT (310) for one or more CBR applications;
wherein the OLT (320) is configured to receive an indication of a status of a CBR application of the one or more CBR applications;
wherein the DBA engine (345), responsive to the indication, is configured to modify CBR bandwidth usage of the one or more ONTs (310) in a bandwidth map, BW Map; and
wherein the OLT (320) communicates the bandwidth map to the one or more ONTs (310).

2. The system (100, 300) of claim 1, wherein the status is one of open or closed.

3. The system (100, 300) of claim 2, wherein the DBA engine (345) is further configured to modify the bandwidth map to increase CBR bandwidth allocation of the one or more ONTs (310) responsive to the status of the CBR application being open.

4. The system (100, 300) of claim 2 or 3, wherein the DBA engine (345) is further configured to modify the bandwidth map to decrease CBR bandwidth allocation of the one or more ONTs (310) responsive to the status of the CBR application being closed.

5. The system (100, 300) of any of claims 1 to 4, wherein the OLT (320) is further configured to receive indication of the status of the CBR application from at least one of the one or more ONTs (310).

6. The system (100, 300) of claim 5, wherein the at least one of the one or more ONTs (310) is further configured to receive the indication of the status of the CBR application from a low latency agent or a latency controller.

7. The system (100, 300) of any of claims 1 to 6, wherein the OLT (320) is further configured with a low latency agent, the low latency agent to receive indication of the status of the CBR application from the one or more CBR applications.

8. The system (100, 300) of any of claims 1 to 7, wherein the OLT (320) is further configured to receive indication of the status of the CBR application from a low latency controller on another device.

9. A method comprising:
identifying, by a dynamic bandwidth allocation, DBA, engine (345), one or more transmission containers (340) used by an optical line terminal, OLT, (320) of a passive optical network, PON, the OLT (320) in communication with one or more optical network terminals, ONTs (310);
allocating, by the DBA engine (345) responsive to registration of the one the one or more transmission containers (340), for the one or more transmission containers (340) a constant bit rate, CBR, bandwidth from upstream bandwidth capacity of the PON, each of the one or more transmission containers (340) to be used by an associated ONT (310) for one or more CBR applications;
receiving, by the OLT (320) an indication of a status of a CBR application of the one or more CBR applications;
modifying, by the DBA engine (345) responsive to the indication, CBR bandwidth usage of the one or more ONTs (310) in a bandwidth map, BW Map,; and
communicating, by the OLT (320), the bandwidth map to the one or more ONTs (310).

10. The method of claim 9, wherein the status is one of open or closed.

11. The method of claim 10, comprising at least one of the following features:
further comprising modifying, by the DBA engine (345), the bandwidth map to increase CBR bandwidth allocation of the one or more ONTs (310) responsive to the status of the CBR application being open;
further comprising modifying, by the DBA engine (345), the bandwidth map to decrease CBR bandwidth allocation of the one or more ONTs (310) responsive to the status of the CBR application being closed.

12. The method of any of claims 9 to 11, further comprising receiving, by the OLT (320), the indication of the status of the CBR application from at least one of the one or more ONTs (310);
in particular further comprising receiving, by the OLT (320), the indication of the status of the CBR application from a low latency agent or a latency controller.

13. The method of any of claims 9 to 12, comprising at least one of the following features:
further comprising receiving, by the OLT (320), the indication of the status of the CBR application from the one or more CBR applications;
further comprising receiving, by the OLT (320), the indication of the status of the CBR application from a low latency controller on another device.

14. A device comprising:
one or more processors, coupled to memory, and configured with:
a dynamic bandwidth allocation, DBA, engine (345) to identify one or more transmission containers (340) used by an optical line terminal, OLT, (320) of a passive optical network, PON,, the OLT (320) in communication with one or more optical network terminals, ONTs, (310);
wherein the DBA engine (345) is configured to allocate for one or more transmission containers (340) a constant bit rate, CBR, bandwidth from upstream bandwidth capacity of the PON responsive, each of the one or more transmission containers (340) to be used by an associated ONT (310) for one or more CBR applications;
wherein the device is configured to receive an indication of a status of a CBR application of the one or more CBR applications as being open or closed;
wherein the DBA engine (345), responsive to the indication, is configured to modify CBR bandwidth usage of the one or more ONTs (310) in a bandwidth map, BW Map; and
wherein the device communicates the bandwidth map to the one or more ONTs (310).

15. The device of claim 14, comprising at least one of the following features:
wherein the device is further configured to receive the indication from one of the one or more ONTs (310);
wherein the device is further configured to receive the indication from a second device;
wherein the device is further configured to receive the indication from the CBR application.
